# EUROPÄISCHE PATENTSCHRIFT

(11) **EP 3 482 927 B1**
(45) Veröffentlichungstag und Bekanntmachung des Hinweises auf die Patenterteilung: **08.09.2021**
(21) Anmeldenummer: 18186222.8
(22) Anmeldetag: 30.07.2018
(51) Int. Cl.: B32B 5/02, B32B 25/04, B32B 25/10, B32B 27/36, B32B 1/08, F16L 11/08

(54) **DAUERTEMPERATURBESTÄNDIGER PES-UMLAGESCHLAUCH FÜR TEMPERATUREN BIS 150°C**
LONG-TERM TEMPERATURE RESISTANT PES HOSE FOR TEMPERATURES UP TO 150°C
TUYAU FLEXIBLE DE COLLECTE PES RÉSISTANT À LA TEMPÉRATURE POUR TEMPÉRATURES JUSQU'À 150°C

(30) Priorität: 08.11.2017 DE 102017219803
(43) Veröffentlichungstag der Anmeldung: 15.05.2019
(73) Patentinhaber: ContiTech Schlauch GmbH, 30165 Hannover (DE)
(72) Erfinder: Brühne, Klaus, 34497 Korbach (DE); Schmelter, Klaus, 59929 Brilon (DE); Tasseki, Metin, 34497 Korbach (DE)
(74) Vertreter: Continental Corporation

(56) Entgegenhaltungen:
- EP-A1- 2 727 719
- WO-A2-2014/019796

## Beschreibung

Die Erfindung betrifft einen Umlageschlauch, der insbesondere bei Anwendungen mit Dauertemperaturen bis 150°C zum Einsatz kommt.

Gattungsgemäße Umlageschläuche sind zum Beispiel aus WO2014/019796A2 bekannt. Es handelt sich um flexible Schläuche, die mit einer äußeren Lage aus Festigkeitsträgern, der so genannten Umlage bzw. Umlageschicht, versehen sind. Innerhalb der umhüllenden äußeren Lage können derartige Schläuche mehrere Lagen oder Schichten aus unterschiedlichen, Elastomeren, thermoplastischen Elastomeren oder Thermoplasten und Festigkeitsträgern aufweisen. Die äußere Lage aus Festigkeitsträgern kann als Geflecht, Gestrick, Gewirke, Gewebe oder dergleichen vorliegen.

Umlageschläuche mit Polyester (PES)-Umlage sind aus diversen Anwendungen bekannt und wurden bisher für Dauertemperaturen von maximal 135°C eingesetzt und freigegeben. Für höhere Temperaturen von 150°C werden meist Einlageschläuche mit kostenintensiveren Aramiden eingesetzt.

Ein Einlageschlauch wird bspw. in EP 2 727 719 A1 offenbart. Hierbei handelt es sich um einen Kühlwasserschlauch für einen Einsatz im Temperaturbereich bis zu 150°C mit einer elastomeren Innenschicht, einer thermoplastischen Barriereschicht, einer Zwischenschicht aus Butylkautschuk, einer Textilschicht und einer elastomeren Deckschicht aus EPDM-Kautschuk.

Derartige Einlageschläuche weisen allerdings aufgrund der notwendigen hochwertigen elastomeren Außenschicht über dem Festigkeitsträger einen deutlichen Kosten- und Gewichtsnachteil auf. Nachteilig sind auch eine reduzierte Flexibilität und ein erhöhter Platzbedarf.

Die Aufgabe der Erfindung besteht darin, einen Umlageschlauch bereitzustellen, der für Anwendungen bei hoher Dauertemperaturbelastung, insbesondere für Dauertemperaturen von 150°C, geeignet ist und die oben genannten Nachteile beseitigt oder zumindest deutlich reduziert. Insbesondere sollte der Umlageschlauch eine Kostenersparnis gegenüber den bekannten Systemen ermöglichen und auch eine höhere Flexibilität, ein geringeres Gewicht und einen geringeren Bauraum aufweisen.

Gelöst wird diese Aufgabe durch einen Umlageschlauch, enthaltend wenigstens eine Innenschicht (1) und eine Umlageschicht (2), dadurch gekennzeichnet, dass die Innenschicht (1) aus mindestens 90 Gew.-% Ethylen-Acrylat-Kautschuk (AEM) und / oder (teil)hydriertem Nitrilkautschuk (HNBR) und / oder Acrylat-Kautschuk (ACM) aufgebaut ist und die Umlageschicht (2) aus mindestens 90 Gew.-% Polyester (PES) aufgebaut ist, wobei der Umlageschlauch keine elastomere Außenschicht auf der Umlageschicht aufweist.

Die erfindungsgemäße Kombination von AEM und / oder HNBR und/oder ACM in der Innenschicht und PES-Umlageschlauch hat sich als dauerstabil für Temperaturen bis 150°C gezeigt und liegt damit auf einem vergleichbaren Niveau mit dem aktuellen Stand der Technik mit einem para-Aramid-Einlageschlauch. Dies führt zu verringerten Kosten, da kostspieliges Aramid nicht erforderlich ist.

Es ergibt sich auch eine geringere Bauraumabmessung und Kosteneinsparungen, da bei den erfindungsgemäßen Umlageschläuchen keine elastomere Außenschicht auf der Umlageschicht wie bei Einlageschläuchen benötigt wird. Der erfindungsgemäße Umlageschlauch weist ein reduziertes Gewicht bei vergleichbarer dynamischer Beständigkeit gegenüber den am Markt verfügbaren Einlageschläuchen auf.

Bevorzugte Ausführungsformen des Verfahrens sind in den abhängigen Ansprüchen angegeben. Im folgenden wird die Erfindung im einzelnen erläutert.

Der erfindungsgemäße Umlageschlauch kann in gerader oder auch in geformter Ausführung, z.B. als Schlauchkrümmer, verwendet werden.

Ein derartiger Umlageschlauch findet vorzugsweise Verwendung im Bereich Turboladerschmierung, Turboladerkühlung, Kompressoren, Kraftstoffsystemen, Dieselpartikelfiltern (DPF), Getriebe- und Motorkühlung oder in Bereichen, in denen aggressive Medien oder Öle unter hohen Temperaturen transportiert werden müssen.

Der Umlageschlauch enthält eine Innenschicht, die insbesondere einen flexiblen Schlauch darstellt. Die Innenschicht ist aus mindestens 90 Gew.-%, bevorzugt mindestens 95 Gew.-% Ethylen-Acrylat-Kautschuk (AEM) und / oder (teil)hydriertem Nitrilkautschuk (HNBR) und / oder Acrylat-Kautschuk (ACM) aufgebaut. Bei AEM, HNBR und ACM handelt es sich um Elastomere, die im allgemeinen eine Temperaturbeständigkeit von größer oder gleich 150°C aufweisen. Die Innenschicht enthält mit anderen Worten 90 bis 100 Gew.-%, bevorzugt 95 Gew.-% bis 100 Gew.-% AEM, HNBR, ACM oder Mischungen von zwei oder allen drei der Elastomere, bezogen auf das Gesamtgewicht der Innenschicht. Bevorzugt wird nur eines dieser Elastomere verwendet.

In bevorzugten Ausführungsformen ist die Innenschicht somit aus mindestens 90 Gew.-%, bevorzugt mindestens 95 Gew.-% AEM oder aus mindestens 90 Gew.-%, bevorzugt mindestens 95 Gew.-% HNBR oder aus mindestens 90 Gew.-%, bevorzugt mindestens 95 Gew.-% ACM aufgebaut. Die Innenschicht enthält mit anderen Worten bevorzugt 90 bis 100 Gew.-%, bevorzugt 95 Gew.-% bis 100 Gew.-% AEM oder 90 bis 100 Gew.-%, bevorzugt 95 Gew.-% bis 100 Gew.-% HNBR oder 90 bis 100 Gew.-%, bevorzugt 95 Gew.-% bis 100 Gew.-% ACM, bezogen auf das Gesamtgewicht der Innenschicht, wobei AEM bevorzugt ist.

Die Innenschicht kann gegebenenfalls zusätzlich ein oder mehrere andere Elastomere, thermoplastische Elastomere oder Thermoplaste als Verschnitt enthalten, das ist aber in der Regel nicht bevorzugt.

In einer bevorzugten Ausführungsform ist die Innenschicht daher eine AEM-Innenschicht, eine HNBR-Innenschicht oder eine ACM-Innenschicht, wobei eine AEM-Innenschicht bevorzugt ist.

In dem Umlageschlauch ist die Innenschicht mit mindestens einer äußeren Lage aus Festigkeitsträgern als Umlageschicht versehen. Die Umlageschicht ist aus mindestens 90 Gew.-%, bevorzugt mindestens 95 Gew.-% Polyester (PES) aufgebaut. Die Umlageschicht enthält mit anderen Worten 90 bis 100 Gew.-%, bevorzugt 95 Gew.-% bis 100 Gew.-% PES, bezogen auf das Gesamtgewicht der Umlageschicht.

Als Material für die Festigkeitsträger der Umlage können neben PES gegebenenfalls zusätzliche Materialien verwendet werden, das ist in der Regel aber nicht bevorzugt. In einer bevorzugten Ausführungsform handelt es sich bei der Umlageschicht daher um eine PES-Umlageschicht.

Als zusätzliches Material für die Festigkeitsträger der Umlageschicht können alle der fachkundigen Person neben PES bekannten natürlichen und synthetischen Materialien verwendet werden. Sofern neben PES zusätzliches Material für die Festigkeitsträger der Umlageschicht eingesetzt wird, gelten die nachstehenden Angaben zur bevorzugten Form des PES für dieses zusätzliche Material entsprechend.

Der PES für die Umlageschicht liegt vorzugsweise in einer Fadenform, insbesondere als Monofile, auch als Monofilamente bezeichnet, Stapelfaser, Filament, Garn oder Zwirn, vor. Stapelfaser werden auch als Spinnfasern bezeichnet. Stapelfasern weisen eine begrenzte Länge auf. Die Stapelfasern haben in der Regel z.B. eine Länge zwischen 10 und 70 mm. Bei Filamenten handelt es sich um Endlosfasern.

In einer bevorzugten Ausführungsform liegt der PES für die Umlageschicht in Form von Endlosfasern, Stapelfasern oder einer Kombination von Endlos- und Stapelfasern vor. Besonders geeignet sind Stapelfasern, da sie in der Regel im Vergleich zu unbehandelten Filamentgarnen eine erhöhte physikalische Lagenhaftung erzeugen. Der Einsatz einer Stapelfaserkonstruktion ermöglicht eine größere Oberflächenabdeckung im Vergleich zu einer Filamentfaser und einen verbesserten Hitzeschutz durch die isolierende Wirkung der Lufteinschlüsse in der Stapelfaserkonstruktion. Im unbehandelten Zustand haben die Stapelfasern ein besseres physikalisches Haftungsvermögen zur Innenschicht oder einer gegebenenfalls vorhandenen Zwischenschicht. Zugleich ergibt sich die Möglichkeit einer verbesserten möglichen Oberflächenbehandlung der Stapelfasern.

Sofern neben PES ein oder mehrere zusätzliche Materialien verwendet werden, können die Werkstoffe hierbei alleine oder in Kombination, z.B. als Hybrid oder als Mischgeflecht, verwendet werden. Ein Mischgeflecht besteht hierbei aus wenigstens zwei alleinstehenden Fäden, die z.B. miteinander verflochten, als Webware verwoben, als Maschenware verstrickt, als Vlies oder Filz verarbeitet sind. Bei einem Hybrid besteht der Faden aus wenigstens zwei verschiedenen Materialien.

Die Umlageschicht wird insbesondere als textiles Flächengebilde in Form von Geflecht, Cord, Gestrick, Gewirk, Gewebe, Vlies oder Gelege aufgebracht, wobei vorzugsweise die Aufbringung als Geflecht erfolgt. Das Geflecht, welches auch ein Mischgeflecht sein kann, kann dabei z.B. nur aus Endlosfasern, nur aus Stapelfasern oder aus einer Kombination von Endlos- und Stapelfasern bestehen.

In einer bevorzugten Ausführungsform enthält die Umlageschicht Polyester-Fäden der Konstruktion dtex 500 x 1 x 2 und / oder dtex 500 x 1 x 3 und / oder dtex 500 x 1 x 4 gemäß der Norm DIN 60900-2: 1988-07. Wie dem Fachmann bekannt, handelt es sich hierbei um eine längenbezogene Gewichtsangabe, wobei die zusätzliche Angabe wie z.B. "1 x 2" bzw. "1 x 3" bedeutet, dass ein Faden aus zwei bzw. drei zusammengedrehten Einzelfäden gebildet ist.

Die Umlageschicht kann dabei einlagig oder mehrlagig ausgebildet sein. Bevorzugt hat die Umlageschicht 1 bis 5 Lagen, besonders bevorzugt 1 bis 3 Lagen und ganz besonders bevorzugt 1 bis 2 Lagen.

Der erfindungsgemäße Umlageschlauch kann zusätzlich mit einer biegesteifen Verstärkung, wie sie bspw. aus EP 2 202 436 A2 für Schläuche mit einer (elastomeren) Deckschicht bekannt sind, ausgerüstet sein. Bei der biegesteifen Verstärkung handelt es sich vorzugsweise um Monofile, auch als Monofilamente bezeichnet, welche gleich- oder gegensinnig um und/oder in die Umlageschicht gewickelt sind. Die Monofile können dabei auch gekreuzt gewickelt sein. Die Monofile können aus einem metallischen, wie bspw. Edelstahl, oder einem nicht-metallischen Werkstoff, wie bspw. Polyester (PES) Polyphenylensulfid (PPS) oder Polyoxadiazol (POD), aufgebaut sein.

In einer Ausführungsform des erfindungsgemäßen Umlageschlauchs kann zusätzlich eine Versiegelung auf der Umlageschicht aufgebracht sein. Derartige Versiegelungen sind bspw. aus der WO 2017/092894 A1 bekannt, die dort als Umlagenschutz bezeichnet werden.

Das Versiegelungsmaterial wird dabei in flüssiger Form, z.B. als Lösung oder Dispersion in einem organischen oder anorganischen Lösungsmittel, insbesondere Wasser, auf die Umlageschicht aufgebracht und bildet nach Verdampfung des Lösungsmittels die Versiegelung. Besonders geeignet sind bspw. Kunstharzdispersionen auf Wasserbasis wie sie in der WO 2017/092894 A1 beschrieben sind. Die Dispersion kann besonders gut in die Umlageschicht eindringen und dort einzelne Fasern miteinander verkleben. Die Verklebung der Fasern verhindert das Ausfransen, z.B. beim Schneiden oder Stanzen.

Die Versiegelung kann bevorzugt aus Kunstharzen gebildet sein, wobei Acrylate, insbesondere Styrolacrylat, und / oder Polyvinylacetate bevorzugt sind. Resorcinformaldehydlatex (RFL) und Fluorpolymere sind ebenfalls geeignet. Die Versiegelung kann Zusatzstoffe enthalten. Beispiele für Zusatzstoffe sind Partikel, insbesondere Metallpartikel, zur Erhöhung des Strahlungs- bzw. Wärmeschutzes, Pigmente, farbgebende Substanzen oder Füllstoffe.

Die Versiegelung kann z.B. als Schnittschutz, welcher das Auffransen der Schnittstelle verhindert, als UV-Schutz, zur Verbesserung der Haftung zwischen Faser und Innenschicht oder zur Erhöhung der chemischen und mechanischen Beständigkeit dienen. Zusätzlich kann eine bessere Geometriehaltigkeit insbesondere bei Formschläuchen erreicht werden.

In einer weiteren Ausführungsform des erfindungsgemäßen Umlageschlauchs kann die Umlageschicht zusätzlich mit einem Überzug versehen sein, der als mechanischer Schutz dienen kann. Derartige Überzüge sind bspw. aus der EP 3175977 A1 bekannt. Der Überzug bildet vorzugsweise keinen festen Haftverbund mit der Umlageschicht, so dass der Überzug von dem Umlageschlauch auf- und abgezogen werden kann.

Der Überzug besteht in einer bevorzugten Ausführungsform aus einem Geflecht, Gewebe oder Gewirke oder Gestrick. Als Materialien für den Überzug können alle der fachkundigen Person bekannten natürlichen und synthetischen Materialien verwendet werden. Derartige Materialien sind bspw. in der EP 3175977 A1 beschrieben. Vorteilhaft wird bspw. für das Gewebe, insbesondere ein Bi-Stretch-Gewebe, und das Gewirke ein Hybridmaterial aus Baumwolle, Polyamid oder Polyester und Elastan, mit einer Baumwoll-dominierenden Seite und einer Polyamid- oder Polyester-dominierenden Seite verwendet.

Der Überzug ergibt einen verbesserten Schutz vor mechanischer Belastung. Es kann auch eine bessere Geometriehaltigkeit insbesondere bei Formschläuchen erreicht werden. Eine zwischen der Oberfläche des Umlageschlauches und dem Überzug befindliche Luftschicht kann im Brandfall als Isolationsschicht dienen.

Der Umlageschlauch kann ferner gegebenenfalls ein oder mehrere Lagen oder Schichten aus unterschiedlichen Elastomeren, thermoplastischen Elastomeren oder Thermoplasten als Zwischenschicht(en) enthalten, wie es für Umlageschläuche üblich ist. Diese Zwischenschichten befinden sich zwischen der Innenschicht und der Umlageschicht. Grundsätzlich können erfindungsgemäß alle Elastomere, thermoplastische Elastomere oder Thermoplaste für solche Zwischenschichten eingesetzt werden. Bevorzugt sind Elastomere, thermoplastische Elastomere oder Thermoplaste, die eine Temperaturbeständigkeit von größer oder gleich 150°C aufweisen.

Ebenso können neben der Umlageschicht gegebenenfalls noch eine oder mehrere eingebettete Festigkeitsträgerlagen vorhanden sein, wie es für Umlageschläuche üblich ist. Hierfür können alle der fachkundigen Person bekannten Festigkeitsträgerwerkstoffe verwendet werden. Diese Festigkeitsträgerlagen befinden sich zwischen der Innenschicht und der Umlageschicht.

In einer Ausführungsform kann die Innenschicht auf der Innenseite, d.h. auf der zum Inneren des Schlauchs zeigenden Seite, mit einer Sperrschicht versehen sein. Eine solche Sperrschicht kann zweckmäßig sein, um eine Diffusionsbarriere zu bilden oder die Innenschicht vor aggressiven Medien zu schützen, die durch den Umlageschlauch befördert werden. Die Sperrschicht kann z.B. aus thermoplastischen fluorhaltigen Polymeren, Fluor-Kautschuk (FKM) und / oder Polyepichlorhydrin (ECO) aufgebaut sein.

Der Umlageschlauch ist bevorzugt ein Schlauch für die Turboladerschmierung, ein Kompressor-Schlauch, ein Schlauch für Dieselpartikelfiltersysteme, ein Kraftstoffschlauch, ein Kühlwasserschlauch, ein Motor-/Getriebeölkühlungsschlauch oder ein Ölschlauch bzw. wird dafür verwendet.

Die Erfindung betrifft auch die Verwendung eines erfindungsgemäßen Umlageschlauchs wie vorstehend beschrieben als dauertemperaturbeständigen Schlauch für Temperaturen bis 150°C. Besonders bevorzugt wird der Umlageschlauch für Anwendungen mit Dauertemperaturen im Bereich von über 135°C bis 150°C eingesetzt.

Der erfindungsgemäße Umlageschlauch weist eine Dauertemperaturbeständigkeit von 150°C auf. Dies ist überraschend, da die Dauertemperaturbeständigkeit von PES selbst maximal 135°C beträgt.

Ein dauertemperaturbeständiger Umlageschlauch für Temperaturen bis 150°C weist eine Dauertemperaturbeständigkeit bei 150°C auf. Unter Dauertemperaturbeständigkeit bei 150°C wird hier verstanden, dass der Festigkeitsverlust des Umlageschlauchs bei einer Wärmealterung in einem Umluftofen bei 150°C für 1000 Stunden im Vergleich zu einem neuen, nicht gealterten Umlageschlauch weniger als 35%, bevorzugt weniger als 30% beträgt, und insbesondere bei 150°C für 3000 Stunden im Vergleich zu einem neuen, nicht gealterten Umlageschlauch weniger als 50% beträgt. Anders ausgedrückt besitzt z.B. der Schlauch nach Alterung bei 150°C für 3000 Stunden noch mindestens 50% der Festigkeit, die ein gleicher, aber nicht gealterter Schlauch aufweist. Der Festigkeitsverlust bzw. der Abbau wird durch Ermittlung des Berstdruckes an neuen Schläuchen im Vergleich zu gealterten Schläuchen bestimmt.

Die Erfindung wird nun anhand von Ausführungsbeispielen unter Bezugnahme auf schematische Zeichnungen erläutert.
- Fig. 1: zeigt einen erfindungsgemäßen Umlageschlauch, aufgebaut aus einer Innenschicht 1 und einer Umlageschicht 2.
- Fig. 2: zeigt eine weitere Ausführungsform eines erfindungsgemäßen Umlageschlauchs, aufgebaut aus einer Innenschicht 1 und einer Umlageschicht 2, wobei die Umlageschicht mit einer optionalen Versiegelung 3 versehen ist.

### Versuchsergebnisse

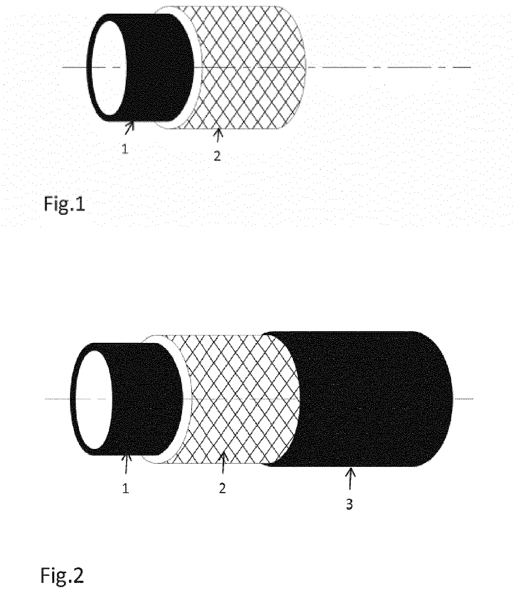

Es wurden folgende drei Umlageschläuche untersucht. Dabei ist anzumerken, dass das Referenzbeispiel auf einem Einlageschlauch basiert, der in der Praxis über der Umlageschicht mit einer elastomeren Außenschicht versehen ist. Um die Vergleichbarkeit der Versuche zu gewährleisten, wurde die elastomere Außenschicht weggelassen.
- Referenzbeispiel:: Umlageschlauch mit einer Innenschicht aus AEM und einer Umlageschicht aus para-Aramid-Faser, Struktur gemäß Fig. 1
- Beispiel 1:: Erfindungsgemäßer Umlageschlauch mit einer Innenschicht aus AEM und einer Umlageschicht aus Polyester (PES)-Fasern, Struktur gemäß Fig. 1
- Beispiel 2:: Erfindungsgemäßer Umlageschlauch mit einer Innenschicht aus AEM und einer Umlageschicht aus Polyester (PES)-Fasern, auf die eine Versiegelung aufgebracht wurde, Struktur gemäß Fig. 2

Diese Umlageschläuche wurden einer Wärmealterung im Umluftofen bei 150°C für eine bestimmte Dauer unterworfen. Der Abbau bzw. Festigkeitsverlust wurde durch Ermittlung des Berstdruckes an neuen Schläuchen im Vergleich zu gealterten Schläuchen bestimmt. Die Dauer der Wärmealterung und die Festigkeit der Schläuche nach Alterung im Vergleich zu dem ungealterten Schlauch sind in nachstehenden Tabellen 1 und 2 angeführt. Die Ergebnisse sind in Tabelle 1 als Berstdruck und in Tabelle 2 als prozentuale Änderung (bezogen auf Berstdruck frische Probe gleich 100%) gezeigt. 0 Tage entsprechen einer frischen, ungealterten Probe. 42 Tage entsprechen etwa 1000 Stunden.

Die Ergebnisse zeigen, dass die Dauertemperaturbeständigkeit bei 150°C der erfindungsgemäßen Beispiele 1 und 2 etwa vergleichbar ist mit der des Referenzbeispiels, obwohl in dem Referenzbeispiel eine Umlageschicht aus kostspieligem p-Aramid eingesetzt wurde, die für Anwendungen mit Dauertemperaturen bis 150°C üblicherweise verwendet werden.

Nach 42 Tagen ergibt sich für die Beispiel 1 und für Beispiel 2 ein Festigkeitsverlust von weniger als 30%. Nach etwa 42 Tagen verlangsamt sich der Abbau merklich. Selbst nach 126 Tagen beträgt der Festigkeitsverlust nicht mehr als 40%.

**Tabelle 1**

| Tage | Referenzbeispiel Berstdruck [bar] | Beispiel 1 Berstdruck [bar] | Beispiel 2 Berstdruck [bar] |
|---|---|---|---|
| 0 | 219 | 198 | 193 |
| 21 | 219 | 164 | 167 |
| 42 | 163 | 141 | 147 |
| 63 | 186 | 139 | 143 |
| 84 | 167 | 135 | 138 |
| 105 | 160 | 128 | 134 |
| 126 | 142 | 118 | 127 |

**Tabelle 2**

| Tage | Referenzbeispiel Restberstdruck [%] | Beispiel 1 Restberstdruck [%] | Beispiel 2 Restberstdruck [%] |
|---|---|---|---|
| 0 | 100 | 100 | 100 |
| 21 | 100 | 83 | 87 |
| 42 | 74 | 71 | 76 |
| 63 | 85 | 70 | 74 |
| 84 | 76 | 68 | 72 |
| 105 | 73 | 65 | 69 |
| 126 | 65 | 60 | 66 |

### Bezugszeichenliste

### (Teil der Beschreibung)

- 1: Innenschicht
- 2: Umlageschicht
- 3: Versiegelung

## Patentansprüche

1. Umlageschlauch, enthaltend wenigstens eine Innenschicht (1) und eine Umlageschicht (2), **dadurch gekennzeichnet, dass** die Innenschicht (1) aus mindestens 90 Gew.-% Ethylen-Acrylat-Kautschuk (AEM) und / oder (teil)hydriertem Nitrilkautschuk (HNBR) und / oder Acrylat-Kautschuk (ACM) aufgebaut ist und die Umlageschicht (2) aus mindestens 90 Gew.-% Polyester (PES) aufgebaut ist, wobei der Umlageschlauch keine elastomere Außenschicht auf der Umlageschicht aufweist.

2. Umlageschlauch nach Anspruch 1, **dadurch gekennzeichnet, dass** die Innenschicht (1) aus mindestens 90 Gew.-% Ethylen-Acrylat-Kautschuk (AEM), aus mindestens 90 Gew.-% (teil)hydriertem Nitrilkautschuk (HNBR) oder aus mindestens 90 Gew.-% Acrylat-Kautschuk (ACM) aufgebaut ist.

3. Umlageschlauch nach Anspruch 1 oder Anspruch 2, **dadurch gekennzeichnet, dass** die Innenschicht (1) eine AEM-Innenschicht, eine HNBR-Innenschicht oder eine ACM-Innenschicht ist und /oder die Umlageschicht (2) eine PES-Umlageschicht ist.

4. Umlageschlauch nach irgendeinem der Ansprüche 1 bis 3, **dadurch gekennzeichnet, dass** der Umlageschlauch zusätzlich mit einer biegesteifen Verstärkung versehen ist, die vorzugsweise aus Monofilamenten gebildet ist, welche gleich- oder gegensinnig um und/oder in die Umlageschicht gewickelt sind.

5. Umlageschlauch nach irgendeinem der Ansprüche 1 bis 4, **dadurch gekennzeichnet, dass** auf der Umlageschicht (2) eine Versiegelung (3) aufgebracht ist und/oder die Umlageschicht (2) mit einem Überzug versehen ist.

6. Umlageschlauch nach irgendeinem der Ansprüche 1 bis 5, **dadurch gekennzeichnet, dass** der Polyester in der Umlageschicht (2) in Form von Endlosfasern, Stapelfasern oder einer Kombination von Endlosfasern und Stapelfasern vorliegt.

7. Umlageschlauch nach irgendeinem der Ansprüche 1 bis 6, **dadurch gekennzeichnet, dass** die Innenschicht (1) auf der Innenseite mit einer Sperrschicht versehen ist.

8. Umlageschlauch nach einem der Ansprüche 1 bis 7, **dadurch gekennzeichnet, dass** der Umlageschlauch ein Schlauch für die Turboladerschmierung, ein Kompressor-Schlauch, ein Schlauch für Dieselpartikelfiltersysteme, ein Kraftstoffschlauch, ein Kühlwasserschlauch, ein Motor-/Getriebeölschlauch oder ein Ölschlauch ist.

9. Umlageschlauch nach einem der Ansprüche 1 bis 8, **dadurch gekennzeichnet, dass** es sich um einen dauertemperaturbeständigen Schlauch für Temperaturen bis 150°C handelt.

10. Verwendung eines Umlageschlauchs nach einem der Ansprüche 1 bis 9 als dauertemperaturbeständiger Schlauch für Temperaturen bis 150°C.

11. Verwendung nach Anspruch 10 für Dauertemperaturen über 135°C.

## Claims

1. Mantle hose comprising at least one inner layer (1) and a mantle layer (2), **characterized in that** the inner layer (1) is constructed from at least 90% by weight ethylene-acrylate rubber (AEM) and/or (partially) hydrogenated nitrile rubber (HNBR) and/or acrylate rubber (ACM) and the mantle layer (2) is constructed from at least 90% by weight polyester (PES), wherein the mantle hose comprises no elastomeric outer layer on the mantle layer.

2. Mantle hose according to Claim 1, **characterized in that** the inner layer (1) is constructed from at least 90% by weight ethylene-acrylate rubber (AEM), from at least 90% by weight (partially) hydrogenated nitrile rubber (HNBR) or from at least 90% by weight acrylate rubber (ACM).

3. Mantle hose according to Claim 1 or Claim 2, **characterized in that** the inner layer (1) is an AEM inner layer, an HNBR inner layer or an ACM inner layer and/or the mantle layer (2) is a PES mantle layer.

4. Mantle hose according to any of Claims 1 to 3, **characterized in that** the mantle hose is additionally provided with a rigid reinforcement which is preferably formed from monofilaments which are co- or counter-rotatingly wound around and/or into the mantle layer.

5. Mantle hose according to any of Claims 1 to 4, **characterized in that** the mantle layer (2) has a seal (3) applied to it and/or the mantle layer (2) has been provided with a coating.

6. Mantle hose according to any of Claims 1 to 5, **characterized in that** the polyester in the mantle layer (2) is in the form of endless fibers, staple fibers or a combination of endless fibers and staple fibers.

7. Mantle hose according to any of Claims 1 to 6, **characterized in that** the inner layer (1) has been provided on its inside with a barrier layer.

8. Mantle hose according to any of Claims 1 to 7, **characterized in that** the mantle hose is a hose for turbocharger lubrication, a compressor hose, a hose for diesel particulate filter systems, a fuel hose, a cooling water hose, a motor/transmission oil hose or an oil hose.

9. Mantle hose according to any of Claims 1 to 8, **characterized in that** a sustained temperature-resistant hose for temperatures up to 150°C is concerned.

10. Use of a mantle hose according to any of Claims 1 to 9 as a sustained temperature-resistant hose for temperatures up to 150°C.

11. Use according to Claim 10 for sustained temperatures above 135°C.

## Revendications

1. Tuyau à enveloppe, contenant au moins une couche intérieure (1) et une couche d'enveloppe (2), **caractérisé en ce que** la couche intérieure (1) est construite à partir d'au moins 90 % en poids de caoutchouc d'éthylène-acrylate (AEM) et/ou de caoutchouc de nitrile (partiellement) hydrogéné (HNBR) et/ou de caoutchouc d'acrylate (ACM), et la couche d'enveloppe (2) est construite à partir d'au moins 90 % en poids de polyester (PES), le tuyau à enveloppe ne comprenant pas de couche extérieure élastomère sur la couche d'enveloppe.

2. Tuyau à enveloppe selon la revendication 1, **caractérisé en ce que** la couche intérieure (1) est construite à partir d'au moins 90 % en poids de caoutchouc d'éthylène-acrylate (AEM), à partir d'au moins 90 % en poids de caoutchouc de nitrile (partiellement) hydrogéné (HNBR) ou à partir d'au moins 90 % en poids de caoutchouc d'acrylate (ACM).

3. Tuyau à enveloppe selon la revendication 1 ou la revendication 2, **caractérisé en ce que** la couche intérieure (1) est une couche intérieure en AEM, une couche intérieure en HNBR ou une couche intérieure en ACM, et/ou la couche d'enveloppe (2) est une couche d'enveloppe en PES.

4. Tuyau à enveloppe selon l'une quelconque des revendications 1 à 3, **caractérisé en ce que** le tuyau à enveloppe est en outre muni d'un renforcement rigide en flexion, qui est de préférence formé à partir de monofilaments, qui sont enroulés dans le même sens ou en sens contraires autour de et/ou dans la couche d'enveloppe.

5. Tuyau à enveloppe selon l'une quelconque des revendications 1 à 4, **caractérisé en ce qu'**un scellement (3) est appliqué sur la couche d'enveloppe (2) et/ou la couche d'enveloppe (2) est munie d'un revêtement.

6. Tuyau à enveloppe selon l'une quelconque des revendications 1 à 5, **caractérisé en ce que** le polyester dans la couche d'enveloppe (2) se présente sous la forme de fibres continues, de fibres discontinues ou d'une combinaison de fibres continues et de fibres discontinues.

7. Tuyau à enveloppe selon l'une quelconque des revendications 1 à 6, **caractérisé en ce que** la couche intérieure (1) est munie d'une couche de barrière sur le côté intérieur.

8. Tuyau à enveloppe selon l'une quelconque des revendications 1 à 7, **caractérisé en ce que** le tuyau à enveloppe est un tuyau pour la lubrification de turbocompresseurs, un tuyau de compresseur, un tuyau pour des systèmes de filtration de particules diesel, un tuyau de carburant, un tuyau d'eau de refroidissement, un tuyau d'huile pour moteur/transmission ou un tuyau d'huile.

9. Tuyau à enveloppe selon l'une quelconque des revendications 1 à 8, **caractérisé en ce qu'**il s'agit d'un tuyau résistant à la température à long terme pour des températures de jusqu'à 150 °C.

10. Utilisation d'un tuyau à enveloppe selon l'une quelconque des revendications 1 à 9 en tant que tuyau résistant à la température à long terme pour des températures de jusqu'à 150 °C.

11. Utilisation selon la revendication 10 pour des températures à long terme de plus de 135 °C.
